# EUROPEAN PATENT APPLICATION

(11) **EP 4 195 675 A1**
(43) Date of publication of application: **14.06.2023**
(21) Application number: 20949567.0
(22) Date of filing: 10.08.2020
(51) Int. Cl.: H04N 21/458, H04N 21/45, H04N 21/422, G06Q 30/02

(54) **DISPLAY DEVICE PROVIDING CUSTOMIZED ADVERTISEMENT AND OPERATION METHOD THEREFOR**

(71) Applicant: LG Electronics Inc., Seoul 07336 (KR)
(72) Inventor: PARK, Sukwon, Seoul 06772 (KR); GONG, Yongtaek, Seoul 06772 (KR); KIM, Jiwon, Seoul 06772 (KR)
(74) Representative: Schornack, Oliver
(86) International application number: PCT/KR2020/010566
(87) International publication number: WO 2022/034935

(57) **Abstract**

A display device according to an embodiment of the present disclosure can generate and provide summarized content by selecting a user's favourite content based on a user viewing history and processing the selected favourite content to suit a user preference. The display device includes a controller configured to acquire user preference, and a display configured to display summarized content generated based on the user preference. The controller can be configured to extract some frames from original content based on the user preference, and to generate summarized content including the extracted frames.

## Description

### TECHNICAL FIELD

The present disclosure relates to a display device providing a customized advertisement and an operation method therefor.

### BACKGROUND ART

Recently, digital TV services using wired or wireless communication networks are becoming common. Digital TV services are capable of providing various services that could not be provided by the existing analog broadcasting services.

For example, Internet Protocol Television (IPTV) and smart TV services, which are types of digital TV services, provide interactivity so that users can actively select the types of watching programs, the watching time, and the like. The IPTV and smart TV services can provide various additional services, such as Internet search, home shopping, online games, and advertisements, based on such interactivity.

On the other hand, when a video advertisement is output, a conventional digital TV adopts a method of playing the video advertisement in one direction through an entire screen. However, this advertisement providing method is compulsory, and thus not only does not arouse interest in users, but also instills a negative perception of the products in the advertisements.

### DISCLOSURE OF INVENTION

### TECHNICAL PROBLEM

The present disclosure aims to provide a display device capable of additionally displaying user-customized advertisements upon displaying advertisements.

The present disclosure aims to provide a display device through which a user can change an advertisement viewing method.

The present disclosure aims to provide a display device capable of additionally providing various advertisements by utilizing an existing advertising space.

### TECHNICAL SOLUTION

A display device which provides a customized advertisement, according to an embodiment of the present disclosure, may include: a network interface; a display; and a processor configured to transmit an advertisement request signal including customized information to an advertisement server through the network interface, to receive a first main advertisement video and a first customized advertisement video corresponding to the customized information from the advertisement server, to output the first main advertisement video to a first area of the display, and to output the first customized advertisement video to a second area of the display.

The customized information may include at least one of position information indicating a position of the display device, information of the display device, information about preference of a user of the display device, display position information about a display position where the first customized advertisement video is to be displayed within the display, display size information about a display size of the first customized advertisement video, or type information of the first customized advertisement video.

The first customized advertisement video may include at least one of a position customized advertisement video according to the position information, a detailed information video about a product in the first main advertisement video, a second main advertisement video for the product, or thumbnail images of other advertisement videos of the product.

The first area may be an entire area of the display, and the second area may overlap the first area and may be a partial area of the display.

The first area may be a partial area of the display, and the second area may be a partial area of the display excluding the first area.

The first area may be a left area of a vertical reference line in the display, and the second area may be a right area of the reference line.

The display device which provides a customized advertisement according to an embodiment of the present disclosure may further include a user input interface configured to communicate with a remote control device, wherein the processor is configured to adjust a position of the reference line according to an input of the remote control device.

When a change signal for changing the first customized advertisement video is received through the user input interface, the processor may be configured to change the displaying of the first customized advertisement video according to a type of the change signal.

When the change signal is a customized advertisement content change signal for changing the first customized advertisement to a second customized advertisement, the processor may be configured to change the first customized advertisement to the second customized advertisement and display the second customized advertisement.

When the change signal is a signal for changing a display type of the first customized advertisement, the processor may be configured to display the customized advertisement by changing at least one of a size or a position of the first area and the second area.

When the change signal is a signal for changing a main video and a sub video to each other, the processor may be configured to display videos by changing a video displayed in the first area and a video displayed in the second area to each other.

The display device which provides a customized advertisement, according to an embodiment of the present disclosure, may further include an audio output interface, wherein the processor may be configured to output an audio of the first main advertisement video or an audio of the first customized advertisement video through the audio output interface according to a position of a pointer of the remote control device.

An operating method of a display device which provides a customized advertisement, according to an embodiment of the present disclosure, may include: transmitting, to an advertisement server, an advertisement request signal including customized information; receiving, from the advertisement server, a first main advertisement video and a first customized advertisement video corresponding to the customized information; and outputting the first main advertisement video to a first area of a display and outputting the first customized advertisement video to a second area of the display.

There is provided a recording medium having recorded thereon an operating method of a display device which provides a customized advertisement, the operating method including: transmitting, to an advertisement server, an advertisement request signal including customized information; receiving, from the advertisement server, a first main advertisement video and a first customized advertisement video corresponding to the customized information; and outputting the first main advertisement video to a first area of a display and outputting the first customized advertisement video to a second area of the display.

### ADVANTAGEOUS EFFECTS

A display device according to an embodiment of the present disclosure has an advantage of arousing a user's interest in advertisements by providing customized advertisements.

A display device according to an embodiment of the present disclosure has an advantage of increasing a product advertisement effect by displaying not only representative information of products but also detailed information of products.

### BRIEF DESCRIPTION OF DRAWINGS

Fig. 1 is a block diagram showing a configuration of a display device according to an embodiment of the present disclosure.
Fig. 2 is a block diagram of a remote control device according to an embodiment of the present disclosure.
Fig. 3 shows an actual configuration example of a remote control device according to an embodiment of the present disclosure.
Fig. 4 shows an example of using a remote control device according to an embodiment of the present disclosure.
Fig. 5 is a flowchart showing an operating method of a display device, according to an embodiment of the present disclosure.
Fig. 6A is a ladder diagram showing an operating method of a system including the display device of the present disclosure.
Fig. 6B is a diagram showing an operating method of a system including the display device of the present disclosure.
Figs. 7 and 8 are diagrams showing embodiments in which the display device of the present disclosure provides customized advertisements.
Fig. 9 is a diagram showing an embodiment in which the display device of the present disclosure provides customized advertisements.
Fig. 10 is a diagram showing an embodiment in which the display device of the present disclosure provides customized advertisements.
Fig. 11 is a diagram showing an embodiment in which the display device of the present disclosure provides customized advertisements.
Figs. 12 and 13 are diagrams showing embodiments in which the display device of the present disclosure provides customized advertisements.

### BEST MODE FOR CARRYING OUT THE INVENTION

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

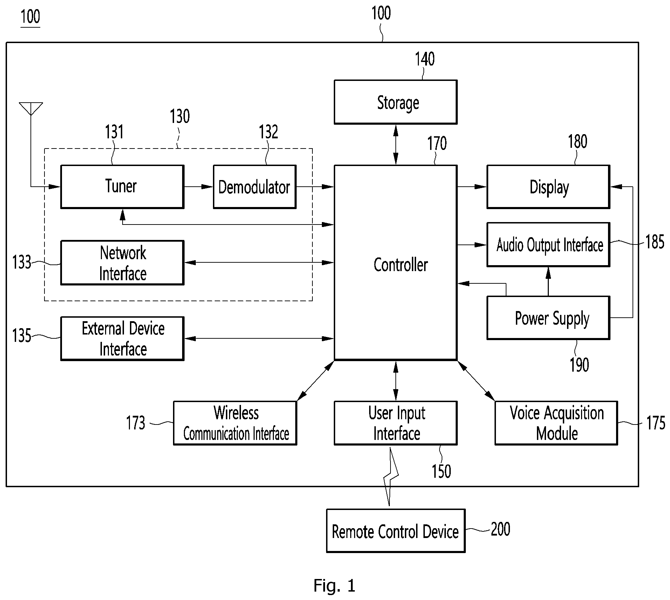

Fig. 1 is a block diagram illustrating a configuration of a display device according to an embodiment of the present disclosure.

Referring to Fig. 1, a display device 100 can include a broadcast reception module 130, an external device interface 135, a storage 140, a user input interface 150, a controller 170, a wireless communication interface 173, a voice acquisition module 175, a display 180, an audio output interface 185, and a power supply 190.

The broadcast reception module 130 can include a tuner 131, a demodulator 132, and a network interface 133.

The tuner 131 can select a specific broadcast channel according to a channel selection command. The tuner 131 can receive broadcast signals for the selected specific broadcast channel.

The demodulator 132 can divide the received broadcast signals into video signals, audio signals, and broadcast program related data signals and restore the divided video signals, audio signals, and data signals to an output available form.

The network interface 133 can provide an interface for connecting the display device 100 to a wired/wireless network including internet network. The network interface 133 can transmit or receive data to or from another user or another electronic device through an accessed network or another network linked to the accessed network.

The network interface 133 can access a predetermined webpage through an accessed network or another network linked to the accessed network. That is, it can transmit or receive data to or from a corresponding server by accessing a predetermined webpage through network.

Then, the network interface 133 can receive contents or data provided from a content provider or a network operator. That is, the network interface 133 can receive contents such as movies, advertisements, games, VODs, and broadcast signals, which are provided from a content provider or a network provider, through network and information relating thereto.

Additionally, the network interface 133 can receive firmware update information and update files provided from a network operator and transmit data to an internet or content provider or a network operator.

The network interface 133 can select and receive a desired application among applications open to the air, through network.

The external device interface 135 can receive an application or an application list in an adjacent external device and deliver it to the controller 170 or the storage 140.

The external device interface 135 can provide a connection path between the display device 100 and an external device. The external device interface 135 can receive at least one of image and audio outputted from an external device that is wirelessly or wiredly connected to the display device 100 and deliver it to the controller. The external device interface 135 can include a plurality of external input terminals. The plurality of external input terminals can include an RGB terminal, at least one High Definition Multimedia Interface (HDMI) terminal, and a component terminal.

An image signal of an external device inputted through the external device interface 135 can be outputted through the display 180. A sound signal of an external device inputted through the external device interface 135 can be outputted through the audio output interface 185.

An external device connectable to the external device interface 135 can be one of a set-top box, a Blu-ray player, a DVD player, a game console, a sound bar, a smartphone, a PC, a USB Memory, and a home theater system but this is just exemplary.

Additionally, some content data stored in the display device 100 can be transmitted to a user or an electronic device, which is selected from other users or other electronic devices pre-registered in the display device 100.

The storage 140 can store signal-processed image, voice, or data signals stored by a program in order for each signal processing and control in the controller 170.

Additionally, the storage 140 can perform a function for temporarily store image, voice, or data signals outputted from the external device interface 135 or the network interface 133 and can store information on a predetermined image through a channel memory function.

The storage 140 can store an application or an application list inputted from the external device interface 135 or the network interface 133.

The display device 100 can play content files (for example, video files, still image files, music files, document files, application files, and so on) stored in the storage 140 and provide them to a user.

The user input interface 150 can deliver signals inputted from a user to the controller 170 or deliver signals from the controller 170 to a user. For example, the user input interface 150 can receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR.

Additionally, the user input interface 150 can deliver, to the controller 170, control signals inputted from local keys (not shown) such as a power key, a channel key, a volume key, and a setting key.

Image signals that are image-processed in the controller 170 can be inputted to the display 180 and displayed as an image corresponding to corresponding image signals. Additionally, image signals that are image-processed in the controller 170 can be inputted to an external output device through the external device interface 135.

Voice signals processed in the controller 170 can be outputted to the audio output interface 185. Additionally, voice signals processed in the controller 170 can be inputted to an external output device through the external device interface 135.

Besides that, the controller 170 can control overall operations in the display device 100.

Additionally, the controller 170 can control the display device 100 by a user command or internal program inputted through the user input interface 150 and download a desired application or application list into the display device 100 in access to network.

The controller 170 can output channel information selected by a user together with processed image or voice signals through the display 180 or the audio output interface 185.

Additionally, according to an external device image playback command received through the user input interface 150, the controller 170 can output image signals or voice signals of an external device such as a camera or a camcorder, which are inputted through the external device interface 135, through the display 180 or the audio output interface 185.

Moreover, the controller 170 can control the display 180 to display images and control broadcast images inputted through the tuner 131, external input images inputted through the external device interface 135, images inputted through the network interface, or images stored in the storage 140 to be displayed on the display 180. In this case, an image displayed on the display 180 can be a still image or video and also can be a 2D image or a 3D image.

Additionally, the controller 170 can play content stored in the display device 100, received broadcast content, and external input content inputted from the outside, and the content can be in various formats such as broadcast images, external input images, audio files, still images, accessed web screens, and document files.

The controller 170 can be referred to as a processor 170.

The wireless communication interface 173 can perform a wired or wireless communication with an external electronic device. The wireless communication interface 173 can perform short-range communication with an external device. For this, the wireless communication interface 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or inter-working) with the display device 100. The wireless communication interface 173 can detect (or recognize) a communicable wearable device around the display device 100. Furthermore, if the detected wearable device is a device authenticated to communicate with the display device 100, the controller 170 can transmit at least part of data processed in the display device 100 to the wearable device through the wireless communication interface 173. Accordingly, a user of the wearable device can use the data processed in the display device 100 through the wearable device.

The voice acquisition module 175 can acquire audio. The voice acquisition module 175 may include at least one microphone (not shown), and can acquire audio around the display device 100 through the microphone (not shown).

The display 180 can convert image signals, data signals, or OSD signals, which are processed in the controller 170, or images signals or data signals, which are received in the external device interface 135, into R, G, and B signals to generate driving signals.

The display 180 can be referred to as a display unit 180.

Furthermore, the display device 100 shown in Fig. 1 is just one embodiment of the present disclosure and thus, some of the components shown can be integrated, added, or omitted according to the specification of the actually implemented display device 100.

That is, if necessary, two or more components can be integrated into one component or one component can be divided into two or more components and configured. Additionally, a function performed by each block is to describe an embodiment of the present disclosure and its specific operation or device does not limit the scope of the present disclosure.

According to another embodiment of the present disclosure, unlike Fig. 1, the display device 100 can receive images through the network interface 133 or the external device interface 135 and play them without including the tuner 131 and the demodulator 132.

For example, the display device 100 can be divided into an image processing device such as a set-top box for receiving broadcast signals or contents according to various network services and a content playback device for playing contents inputted from the image processing device.

In this case, an operating method of a display device according to an embodiment of the present disclosure described below can be performed by one of the display devices described with reference to Fig. 1, an image processing device such as the separated set-top box, and a content playback device including the display 180 and the audio output interface 185.

The audio output interface 185 receives the audio processed signal from the controller 170 and outputs the sound.

The power supply 190 supplies the corresponding power throughout the display device 100. In particular, the power supply 190 supplies power to the controller 170 that can be implemented in the form of a System On Chip (SOC), a display 180 for displaying an image, and the audio output interface 185 for outputting audio or the like.

Specifically, the power supply 190 may include a converter for converting an AC power source into a DC power source, and a DC/DC converter for converting a level of the DC source power.

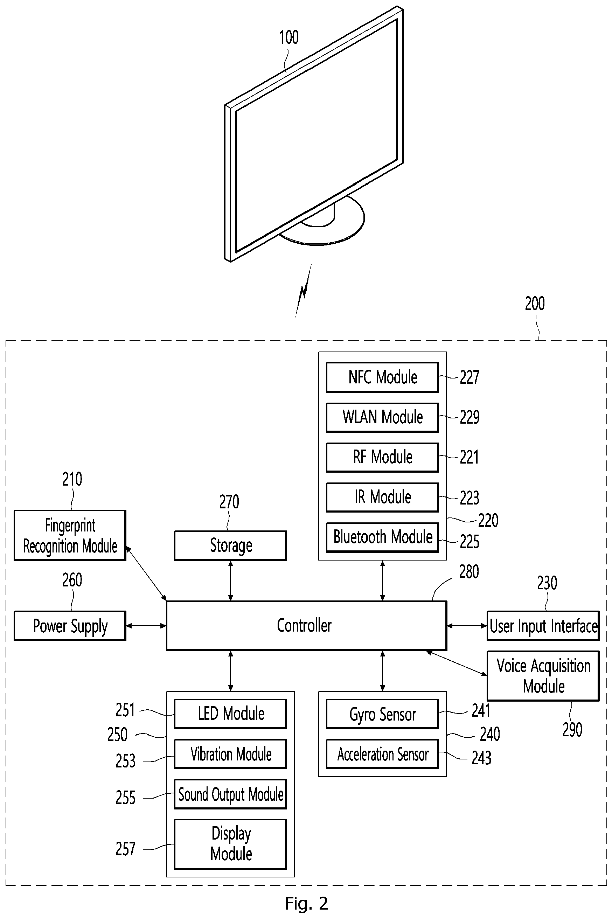

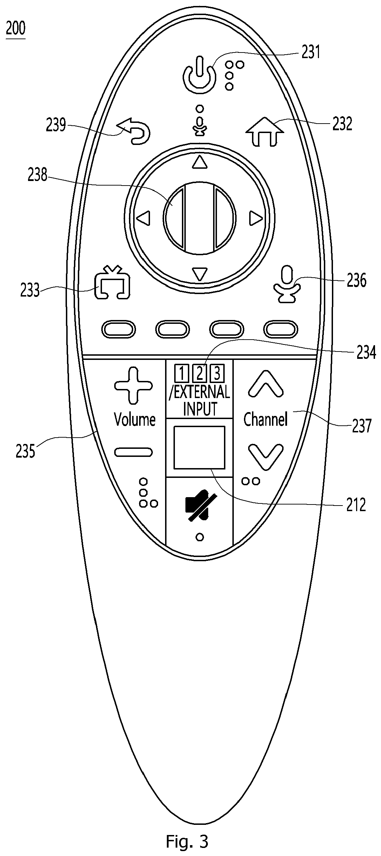

Then, referring to Figs. 2 and 3, a remote control device is described according to an embodiment of the present disclosure.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 can include a fingerprint recognition module 210, a wireless communication interface 220, a user input interface 230, a sensor 240, an output interface 250, a power supply 260, a storage 270, a controller 280, and a voice acquisition module 290.

Referring to Fig. 2, the wireless communication interface 220 transmits/receives signals to/from an arbitrary any one of display devices according to the above-mentioned embodiments of the present disclosure.

The remote control device 200 can include an RF module 221 for transmitting/receiving signals to/from the display device 100 according to the RF communication standards and an IR module 223 for transmitting/receiving signals to/from the display device 100 according to the IR communication standards. Additionally, the remote control device 200 can include a Bluetooth module 225 for transmitting/receiving signals to/from the display device 100 according to the Bluetooth communication standards. Additionally, the remote control device 200 can include an NFC module 227 for transmitting/receiving signals to/from the display device 100 according to the Near Field Communication (NFC) communication standards and a WLAN module 229 for transmitting/receiving signals to/from the display device 100 according to the Wireless LAN (WLAN) communication standards

Additionally, the remote control device 200 can transmit signals containing information on a movement of the remote control device 200 to the display device 100 through the wireless communication interface 220.

Moreover, the remote control device 200 can receive signals transmitted from the display device 100 through the RF module 221 and if necessary, can transmit a command on power on/off, channel change, and volume change to the display device 100 through the IR module 223.

The user input interface 230 can be configured with a keypad button, a touch pad, or a touch screen. A user can manipulate the user input interface 230 to input a command relating to the display device 100 to the remote control device 200. If the user input interface 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 can be a button for recognizing a user's fingerprint. According to an embodiment of the present disclosure, the fingerprint recognition button 212 can perform a push operation and receive a push operation and a fingerprint recognition operation. The power button 231 can be button for turning on/off the power of the display device 100. The power button 231 can be button for moving to the home screen of the display device 100. The live button 233 can be a button for displaying live broadcast programs. The external input button 234 can be button for receiving an external input connected to the display device 100. The voice adjustment button 235 can be button for adjusting the size of a volume outputted from the display device 100. The voice recognition button 236 can be a button for receiving user's voice and recognizing the received voice. The channel change button 237 can be a button for receiving broadcast signals of a specific broadcast channel. The check button 238 can be a button for selecting a specific function and the back button 239 can be a button for returning to a previous screen.

Again, Fig. 2 is described.

If the user input interface 230 includes a touch screen, a user can touch a soft key of the touch screen to input a command relating to the display device 100 to the remote control device 200. Additionally, the user input interface 230 can include various kinds of input means manipulated by a user, for example, a scroll key and a jog key, and this embodiment does not limit the scope of the present disclosure.

The sensor 240 can include a gyro sensor 241 or an acceleration sensor 243 and the gyro sensor 241 can sense information on a movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor and sense a distance with respect to the display 180 of the display device 100.

The output interface 250 can output image or voice signals corresponding to a manipulation of the user input interface 230 or corresponding to signals transmitted from the display device 100. A user can recognize whether the user input interface 230 is manipulated or the display device 100 is controlled through the output interface 250.

For example, the output interface 250 can include an LED module 251 for flashing, a vibration module 253 for generating vibration, a sound output module 255 for outputting sound, or a display module 257 for outputting an image, if the user input interface 230 is manipulated or signals are transmitted/received to/from the display device 100 through the wireless communication interface 220.

Additionally, the power supply 260 supplies power to the remote control device 200 and if the remote control device 200 does not move for a predetermined time, stops the power supply, so that power waste can be reduced. The power supply 260 can resume the power supply if a predetermined key provided at the remote control device 200 is manipulated.

The storage 270 can store various kinds of programs and application data necessary for a control or operation of the remote control device 200. If the remote control device 200 transmits/receives signals wirelessly through the display device 100 and the RF module 221, the remote control device 200 and the display device 100 transmits/receives signals through a predetermined frequency band.

The controller 280 of the remote control device 200 can store, in the storage 270, information on a frequency band for transmitting/receiving signals to/from the display device 100 paired with the remote control device 200 and refer to it.

The storage 270 can be referred to as a memory 270.

The controller 280 controls general matters relating to a control of the remote control device 200. The controller 280 can transmit a signal corresponding to a predetermined key manipulation of the user input interface 230 or a signal corresponding to a movement of the remote control device 200 sensed by the sensor 240 to the display device 100 through the wireless communication interface 220.

The controller 280 can be referred to as a processor 280.

Additionally, the voice acquisition module 290 of the remote control device 200 can obtain voice.

The voice acquisition module 290 can include at least one microphone 291 and obtain voice through the microphone 291.

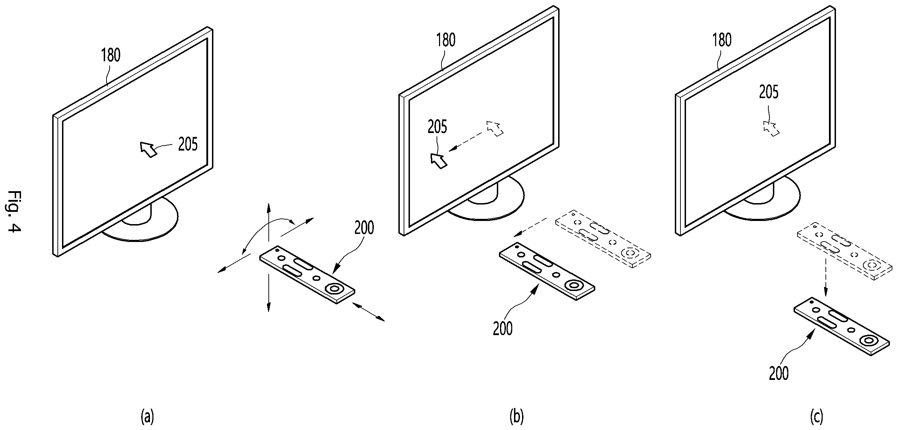

Then, Fig. 4 is described.

Fig. 4 is a view of utilizing a remote control device according to an embodiment of the present disclosure.

Fig. 4A illustrates that a pointer 205 corresponding to the remote control device 200 is displayed on the display 180.

A user can move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 can be referred to as a spatial remote controller.

Fig. 4B illustrates that if a user moves the remote control device 200, the pointer 205 displayed on the display 180 of the display device 100 is moved to the left in correspondence thereto.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4C illustrates that while a specific button in the remote control device 200 is pressed, a user moves the remote control device 200 away from the display 180. Thus, a selection area in the display 180 corresponding to the pointer 205 can be zoomed in and displayed largely.

On the other hand, if a user moves the remote control device 200 close to the display 180, a selection area in the display 180 corresponding to the pointer 205 can be zoomed out and displayed reduced.

On the other hand, if the remote control device 200 is away from the display 180, a selection area can be zoomed out and if the remote control device 200 is close to the display 180, a selection area can be zoomed in.

Additionally, if a specific button in the remote control device 200 is pressed, the recognition of a vertical or horizontal movement can be excluded. That is, if the remote control device 200 is moved away from or close to the display 180, the up, down, left, or right movement cannot be recognized and only the back and forth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display 180 in correspondence to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display 180 and also can be displayed in correspondence to a plurality of points such as a line and a surface.

On the other hand, when a video advertisement is output, a conventional display device adopts a method of playing the video advertisement in one direction through an entire screen. However, this advertisement providing method is compulsory, and thus not only does not arouse interest in users, but also instills a negative perception of the products in the advertisements.

Accordingly, the display device 100 according to an embodiment of the present disclosure provides a device capable of providing user-customized advertisements, such as local business advertisements, and changing an advertisement viewing method, so as to arouse a user's interest in viewing advertisements and provide more information by utilizing an advertisement space.

The display device 100 according to an embodiment of the present disclosure can transmit an advertisement request signal including customized information to an advertisement server, receive a customized advertisement corresponding to a main advertisement video and a customized information from the advertisement server, output the main advertisement video on the first area of the display 180, and output the customized advertisement on the second area of the display 180.

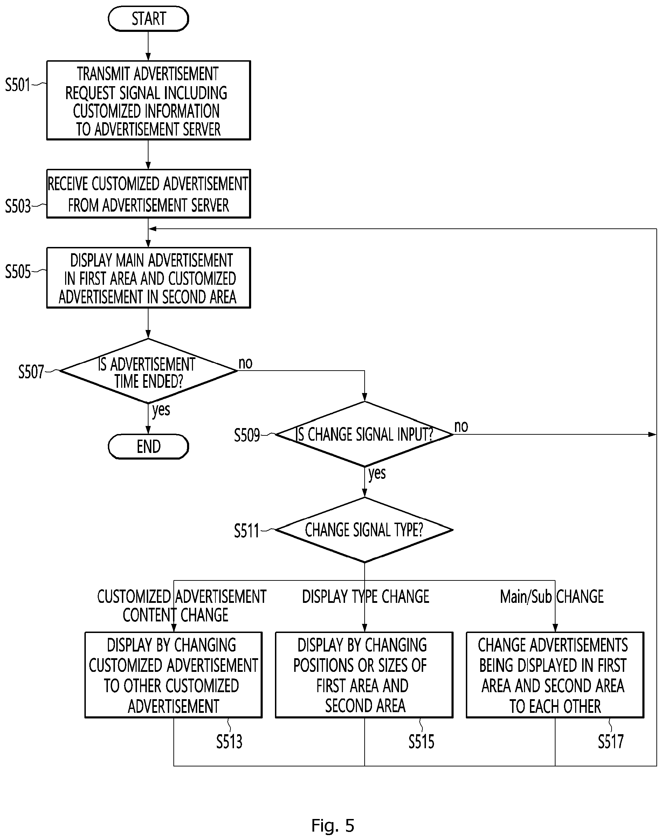

Next, an operating method of the display device 100 according to an embodiment of the present disclosure will be described in detail with reference to Fig. 5.

Fig. 5 is a flowchart showing an operating method of a display device, according to an embodiment of the present disclosure.

The display device 100 of the present disclosure can transmit an advertisement request signal including customized information to an advertisement server (S501).

The controller 170 can transmit the advertisement request signal including customized information to the advertisement server through the network interface 133.

The customized information can refer to information necessary for the display device 100 to request an advertisement from the advertisement server. For example, the customized information can include position information indicating the position of the display device 100 (for example, an area where the display device 100 is located, a building where the display device 100 is located, etc.), information of the display device 100, information about preference of a user of the display device 100, display position information about a display position where the customized advertisement video is to be displayed within the display 180, display size information about a display size for displaying the customized advertisement video, appearance time of the customized advertisement, total advertisement time, display type information of the advertisement video.

The controller 170 can transmit the customized information to the advertisement server by using a video ad serving template (VAST).

The VAST is a standard for communication requirements between the advertisement server and the display device, and can refer to a data standard declared based on XML. The display device 100 according to an embodiment of the present disclosure can request an advertisement from the advertisement server by using the VAST and receive a desired advertisement. This is only an example, and the display device 100 of the present disclosure can transmit customized information to the advertisement server by using a standard other than the VAST.

The display device 100 can receive a customized advertisement corresponding to the customized information from the advertisement server (S503).

The controller 170 can receive a customized advertisement video from the advertisement server through the network interface 133. The controller 170 can receive both the main advertisement video and the customized advertisement video from the advertisement server through the network interface 133.

There can be a plurality of main advertisement videos and a plurality of customized advertisement videos. Accordingly, the main advertisement videos can include a first main advertisement video, a second main advertisement video, and an n-th main advertisement video. The customized advertisement videos can include a first customized advertisement video, a second customized advertisement video, and an n-th customized advertisement video.

The customized advertisement or the customized advertisement video can refer to a user-customized advertisement related to a product of the main advertisement video. When there is a plurality of user-customized advertisements related to the product of the main advertisement, the controller 170 can receive a plurality of customized advertisements. For example, the customized advertisement video can include a location customized advertisement video of the product in the main advertisement video (for example, local business advertisement video of the main advertisement product), a video showing detailed information of the product in the main advertisement video, other advertisement videos of products in the main advertisement video (for example, if there are a plurality of main advertisement videos, a second main advertisement video distinguished from a first main advertisement video), and thumbnail images of other advertisement videos of the product in the main advertisement video.

The controller 170 can receive a URL address of the main advertisement video, a URL address of the customized advertisement video, and the like. The controller 170 can receive, from the advertisement server, the main advertisement video and the customized advertisement video in the form of a video file.

The display device 100 can display the customized advertisement received from the advertisement server on the display 180 (S505).

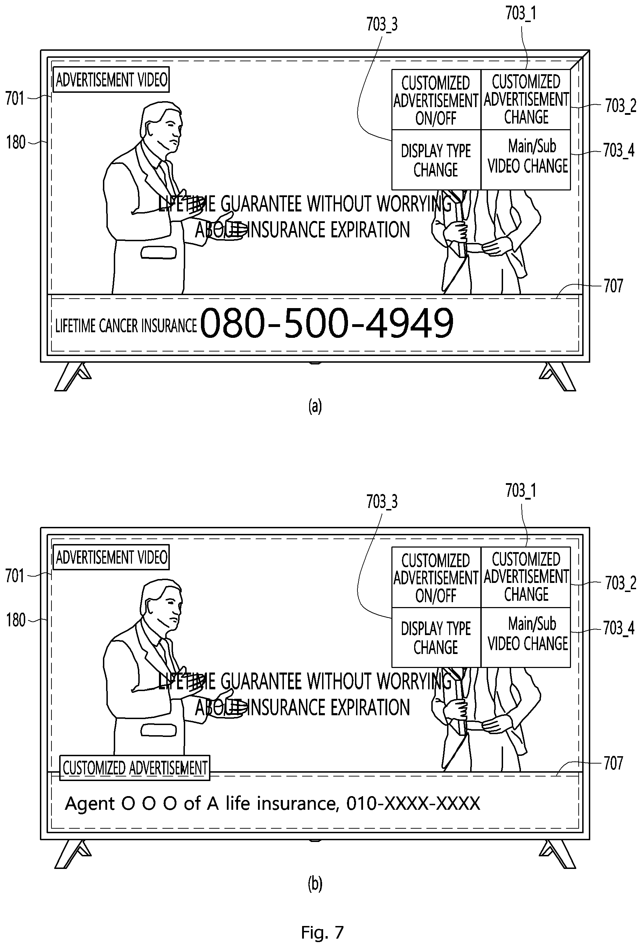

The controller 170 can display the main advertisement video in the first area of the display 180. In addition, the controller 170 can display the main advertisement video in the first area of the display 180 as default, and when an input signal for displaying the customized advertisement video is received through the remote control device 200, can display the customized advertisement video in the second area. In addition, the controller 170 can receive an input signal for displaying the customized advertisement video through a customized advertisement ON/OFF icon (see 703 of Fig. 7) displayed on the display 180, the controller 170 can display the customized advertisement video in the second area.

The first area can be the entire area of the display 180, and the second area can be a partial area of the display 180 overlapping the first area. Alternatively, the first area can be a partial area of the display 180, and the second area can be the remaining area of the display 180 excluding the first area. This is only an example, and the sizes and positions of the first area and the second area according to the embodiment of the present disclosure can be changed according to an advertisement display type described below, and details thereof will be described below.

The controller 170 can display an advertisement video by using the URL information received from the advertisement server. For example, the controller 170 can receive the main advertisement video from the content server by using the URL address of the main advertisement video received from the advertisement server, and can display the main advertisement video in the first area of the display 180. In addition, the controller 170 can receive the customized advertisement video from the content server by using the URL address of the customized advertisement video received from the advertisement server, and can display the customized advertisement video in the second area of the display 180.

In addition, the controller 170 can receive and display the main advertisement video and the customized advertisement video in the form of a file through the advertisement server. The controller 170 can display the main advertisement video and the customized advertisement video in the first area and the second area of the display 180 by using the received video file.

When the main advertisement video and the customized advertisement video are displayed on the display 180, the controller 170 can change the audio output through the audio output interface 185 according to the position of the pointer 205 of the remote control device 200. For example, when the pointer 205 of the remote control device 200 is located in the first area where the main advertisement video is displayed, the controller 170 can output the audio of the main advertisement video, and when the pointer 205 of the remote control device 200 is located in the second area where the customized advertisement video is displayed, the controller 170 can output the audio of the customized advertisement video. This is only an example, and the controller 170 can output the audio of the advertisement video displayed in the corresponding area through the audio output interface 185 according to an input of selecting the first area or the second area.

The display device 100 can determine whether the advertisement time has ended (S507). When the customized advertisement change signal is not input, the controller 170 can continue to display the main advertisement and the customized advertisement until the advertisement time ends (S507).

When the advertisement time has not ended, the controller 170 can determine whether a change signal is input (S509).

When the change signal is input, the controller 170 can determine the type of the change signal (S511).

When the input change signal is a content change signal for changing a first customized advertisement to a second customized advertisement, the controller 170 can change the displayed first customized advertisement to the second customized advertisement and display the second customized advertisement (S513).

As described above, the customized advertising video can include the local business advertisement video of the product in the main advertisement video, the video showing detailed information of the product in the main advertisement video, other advertisement videos of products in the main advertisement video, and the thumbnail images of other advertisement videos of the product in the main advertisement video.

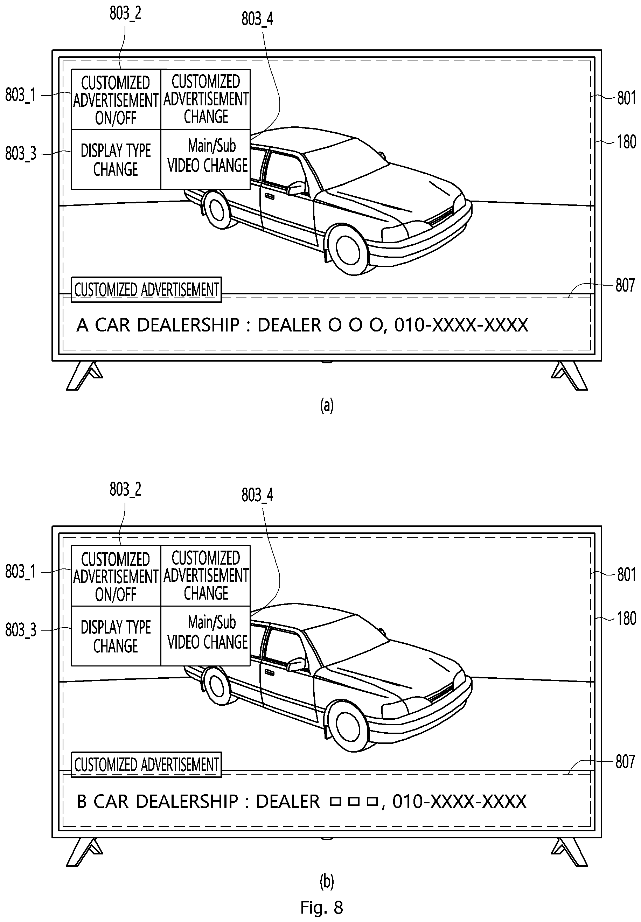

The controller 170 can change the first customized advertisement video displayed in the second area of the display 180 to the second customized advertisement video. For example, when the controller 170 receives the content change signal of the customized advertisement while the main advertisement video is displayed in the first area of the display 180 and the first local business advertisement of the product in the main advertisement video is displayed in the second area, the controller 170 can display a second local business advertisement of the product in the main advertisement video. In addition, when the controller 170 receives the content change signal of the customized advertisement while the main advertisement video is displayed in the first area of the display 180 and the local business advertisement of the product in the main advertisement video is displayed in second area, the controller 170 can display a video showing detailed information of the product in the main advertisement video. Details thereof will be described below with reference to Fig. 8.

When there is no other customized advertisement video to be displayed, the controller 170 can request another customized advertisement video from the advertisement server again. Alternatively, the controller 170 can display a message indicating that there is no other customized advertisement video to be provided through the display 180.

When the input change signal is a signal for changing an advertisement display type, the controller 170 can display the advertisement video by changing the positions or sizes of the first area and the second area in response to the input signal (S515).

The display type of the customized advertisement provided by the display device 100 according to an embodiment of the present disclosure is diverse, for example, a first type (for example, a caption type), a second type (for example, a vertical type), and a third type (for example, a picture in picture (PIP) type).

When the controller 170 receives an input signal for selecting a display type change icon (see 703_3 of Fig. 7) displayed on the display 180, the controller 170 can recognize that a signal for changing the advertisement display type has been received. For example, when the controller 170 receives a signal of clicking the display type change icon (see 703_3 of Fig. 7) once, the controller 170 can change the display type from the first type to the second type, and when the controller 170 receives a signal of clicking the display type change icon (see 703_3 of Fig. 7) once more, the controller 170 can change the display type from the second type to the third type.

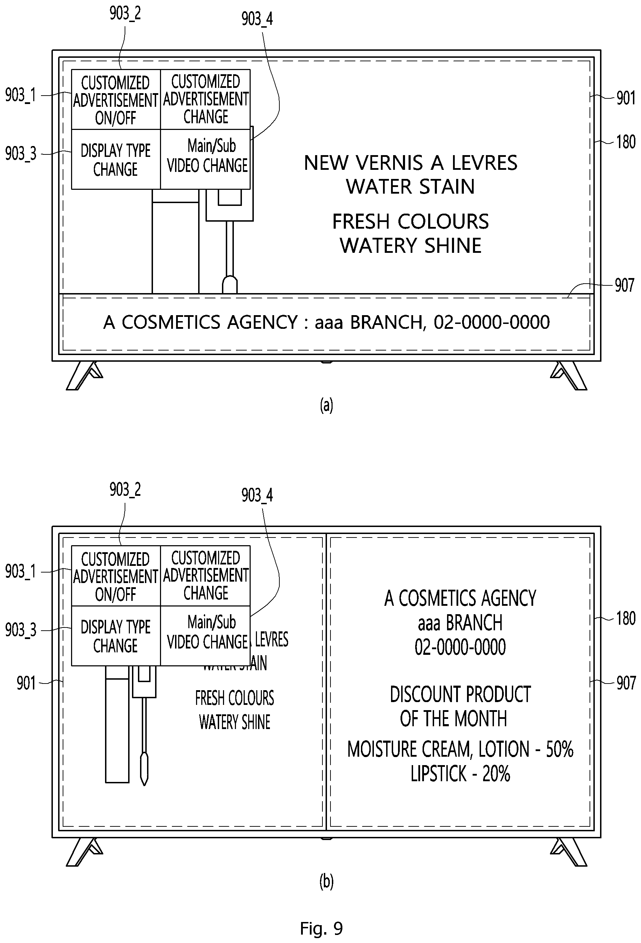

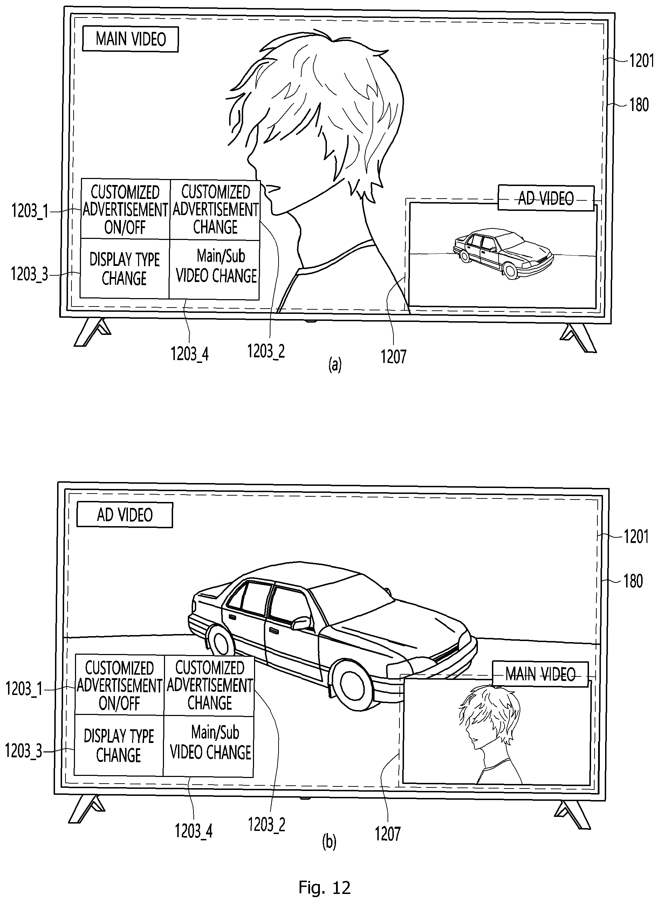

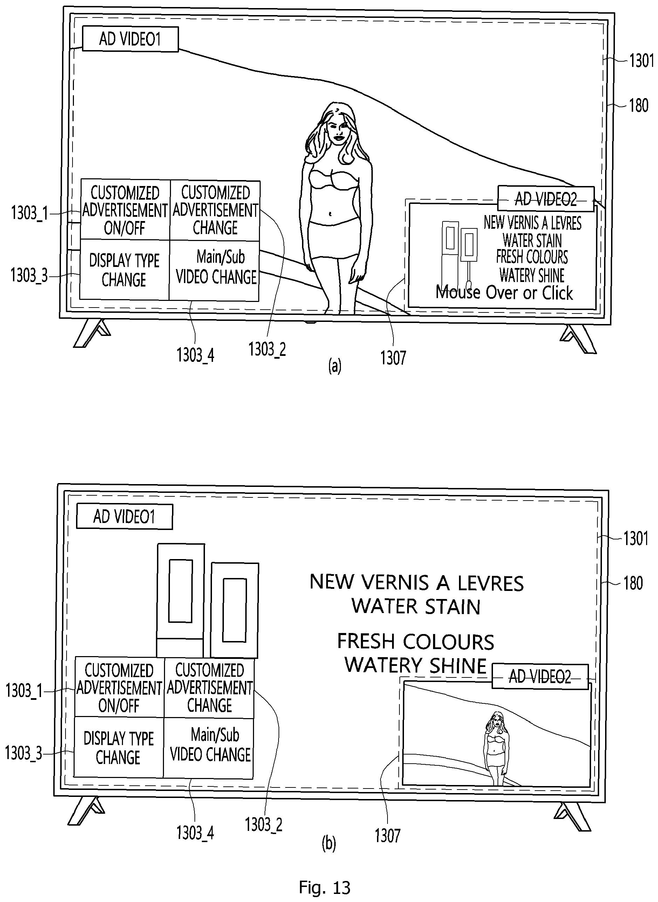

The display device 100 can display the customized advertisement in the first type (for example, the caption type) as shown in Figs. 7 and 8, the display device 100 can display the customized advertisement in the second type (for example, the vertical type) as shown in Figs. 9 to 11, and the display device 100 can display the customized advertisement in the third type (for example, the PIP type) as shown in Figs. 12 and 13.

When the customized advertisement is displayed in the caption type, the customized advertisement video can be a text image.

The controller 170 can change the positions or sizes of the first area and the second area in response to the display type change signal, and can display the main advertisement video and the customized advertisement video in the changed first and second areas.

For example, when the display type change signal is a signal for changing the advertisement display type to the first type (for example, the caption type), the controller 170 can set the first areas 701 and 801 to have the same size and position as the entire area of the display 180 as shown in Figs. 7 and 8, can overlap the second areas 707 and 807 with the first areas, and can set the size and position of the second areas so as to be located at the lower end of the display 180.

As another example, when the display type change signal is a signal for changing the advertisement display type to the second type (for example, the vertical type), the controller 170 can set the position and size of the first areas 901, 1001, and 1101 to the left area based on a reference line of the display 180 in the entire area of the display 180 as shown in Figs. 9 to 11, and can set the position and size of the second areas 907, 1007, and 1107 to the right area based on the reference line of the display 180.

For example, when the display type change signal is a signal for changing the advertisement display type to the third type (for example, the PIP type), the controller 170 can set the first areas 1201 and 1301 to the entire area of the display 180 as shown in Figs. 12 and 13, can overlap the second areas 1207 and 1307 with the first areas 1201 and 1301, and can set the position and size of the second areas 1207 and 1307 so as to be located at a portion of the right lower end of the display 180.

This is only an example, and the advertisement display type can be diverse other than this, and the controller 170 can set the size and position of the first area and the second area according to the advertisement display type.

When the controller 170 transmits the customized information to the advertisement server, the controller 170 can transmit the changed size and location information of the first area and the second area and can receive the main advertisement video and the customized advertisement video corresponding thereto.

When the input change signal is a signal for changing the main video and the sub video, the controller 170 can change and display advertisements being displayed in the first area and the second area (S517).

When the controller 170 receives the input signal of the main/sub video change icon (see 703_4 of Fig. 7), the controller 170 can recognize the input change signal as a signal for changing the main video and the sub video. When the controller 170 receives a signal for changing the main video and the sub video, the controller 170 can change advertisements being displayed in the first area and the second area to each other and display the changed advertisements.

For example, the controller 170 receives the input signal of the main/sub video change icon (see 703_4 of Fig. 7) while displaying the main advertisement video in the first area of the display 180 and displaying the customized advertisement video in the second area, the controller 170 can display the customized advertisement video in the first area and the main advertisement video in the second area.

Details thereof will be described below with reference to Figs. 12 and 13.

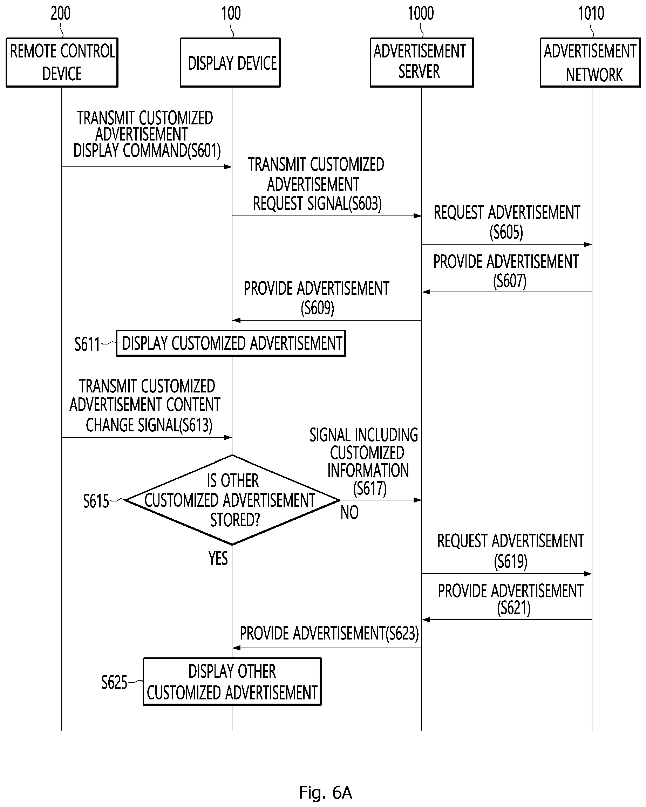

Fig. 6A is a ladder diagram showing an operating method of a system including the display device of the present disclosure.

The remote control device 200 can transmit a customized advertisement display command to the display device 100 (S601).

The customized advertisement display command can be transmitted by pressing a customized advertisement display command button provided in the remote control device 200, and can be transmitted through a select command of the customized advertisement ON/OFF icon (see 703_1 of Fig. 7) displayed on the screen of the display device 100.

Upon receiving the customized advertisement display command, the display device 100 can transmit a customized advertisement request signal including customized information to the advertisement server 1000 (S603). Upon receiving the customized advertisement request signal, the advertisement server 1000 can request the advertisement to the advertisement network 1010 (S605). The advertisement network 1010 can refer to a server of a company that sells advertisements and operates advertisements. This is only an example, and when the advertisement server 1000 can directly provide the customized advertisement requested by the display device 100, operations S605, S607, S619, and S621 performed between the advertisement server 1000 and the advertisement network 1010 can be omitted.

The advertisement network 1010 can provide the advertisement corresponding to the advertisement request received from the advertisement server 1000 (S607).

The advertisement server 1000 can provide the advertisement received from the advertisement network 1010 to the display device 100 (S609).

The display device 100 can display the customized advertisement (S611). Since the method by which the display device displays the customized advertisement has been described in detail with reference to Fig. 5, a detailed description thereof will be omitted.

While the display device 100 is displaying the customized advertisement, the remote control device 200 can transmit a customized advertisement content change signal (S613).

Upon receiving the customized advertisement content change signal, the display device 100 can determine whether another customized advertisement to be changed is stored (S615).

When no other customized advertisement is stored, the display device 100 can repeat operations S617, S619, S621, and S623 of requesting the advertisement by transmitting the customized advertisement request signal including customized information to the advertisement server 1000 and the advertisement network 1010 and receiving the advertisement.

The display device 100 can display other stored customized advertisements in addition to the currently displayed customized advertisement (S625). In addition, even when the other customized advertisements are not stored, the display device 100 can receive the other customized advertisements from the advertisement server 1000 or the advertisement network 1010 and display the other customized advertisements.

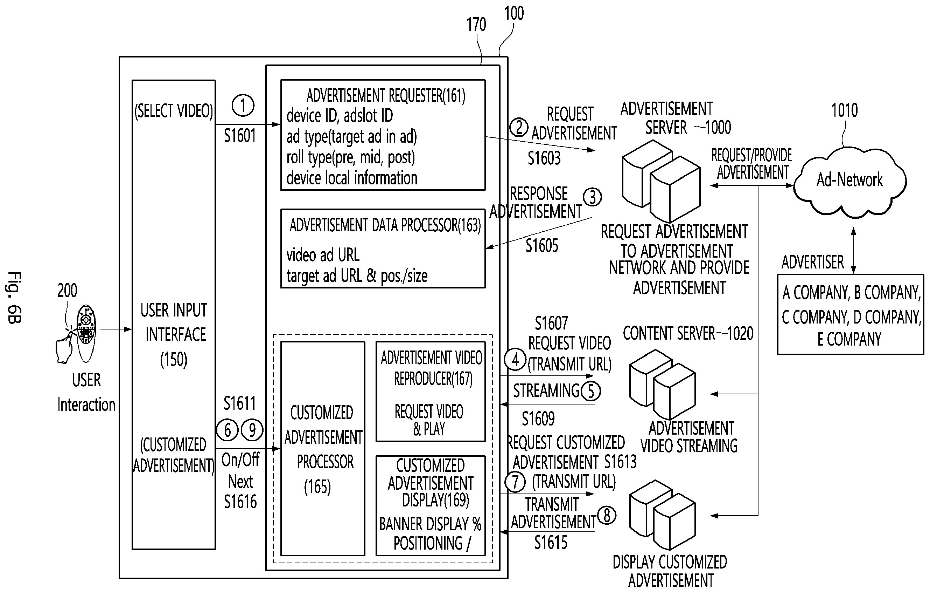

Fig. 6B is a diagram showing an operating method of a system including the display device of the present disclosure.

The system including the display device 100 of the present disclosure can include the display device 100, an advertisement server 1000, an advertisement network 1010, and a content server 1020.

The controller 170 of the display device 100 can include an advertisement requester 161 that transmits an advertisement request signal including customized information to the advertisement server, an advertisement data processor 163 that processes advertisement data received from the advertisement server, a customized advertisement processor 165 that processes a customized advertisement request signal, an advertisement video reproducer 167 that requests and reproduces an advertisement video based on the advertisement data received from the advertisement server, and a customized advertisement display 169 that displays a customized advertisement by designating the position or size of the customized advertisement. This is only an example for convenience of description and does not limit the scope of the present disclosure.

The display device 100 can receive a video select command from the remote control device 200 through the user input interface 150 (S1601). The video select command can include a broadcast video select command, a main advertisement video select command, and the like.

When the video select command is received, the controller 170 or the advertisement requester 161 of the controller 170 can transmit, to the advertisement server 1000, the advertisement request signal including customized information such as device ID, advertisement type, and position information (S1603).

The advertisement server 1000 can receive, from the advertisement network 1010, advertisement data such as the main advertisement video, the customized advertisement video, the URL address of the main advertisement video, and the URL address of the customized advertisement video, and can transmit the advertisement data to the display device 100 (S1605).

The controller 170 or the advertisement data processor 163 of the controller 170 can store the advertisement data received from the advertisement server 1000, and can transmit the advertisement data to the advertisement video reproducer 167 or the customized advertisement display 169.

The controller 170 or the advertisement video reproducer 167 of the controller 170 can request the video to the content server 1020 based on the received advertisement data (S1607). At this time, the video that the display device 100 requests to the content server 1020 can be a broadcast video or a main advertisement video.

The controller 170 or the advertisement video reproducer 167 of the controller 170 can stream the video requested to the content server 1020 (S1609). The video requested to the content server 1020 can be a broadcast video or a main advertisement video. The controller 170 can control the display 180 to display the corresponding video.

The display device 100 can receive the customized advertisement display request signal from the remote control device 200 through the user input interface 150 while displaying the broadcast video or the main advertisement video (S1611).

The controller 170 or the customized advertisement processor 165 of the controller 170 can determine whether the customized advertisement display request signal is a customized advertisement ON/OFF signal or a next customized advertisement display request signal, and can perform an operation corresponding to the request signal.

When the signal received from the remote control device 200 is a customized advertisement ON signal, the controller 170 or the customized advertisement reproducer 169 of the controller 170 can request the customized advertisement to the content server 1020 based on the advertisement data received from the advertisement server 1000 (S1613). The customized advertisement display 169 can request the customized advertisement by designating the position or size of the customized advertisement.

The controller 170 or the customized advertisement display 169 of the controller 170 can receive the customized advertisement requested to the content server 1020 (S1616). The controller 170 or the customized advertisement display 169 of the controller 170 can control the received customized advertisement to be displayed on the display 180.

When the customized advertisement change signal for displaying the next customized advertisement is received from the remote control device 200 through the user input interface 150, the controller 170 or the customized advertisement processor 165 of the controller 170 can change and display the customized advertisement. For example, the display device 100 can change the first customized advertisement being displayed to the second customized advertisement and can display the second customized advertisement.

When the custom advertisement OFF command is received from the remote control device 200 through the user input interface 150, or when there is no next customized advertisement to be displayed, the controller 170 or the customized advertisement processor 165 of the controller 170 can end the display of the customized advertisement.

Next, a method by which the display device 100 according to the present disclosure displays a customized advertisement will be described with reference to Figs. 7 to 13.

Figs. 7 and 8 are diagrams showing embodiments in which the display device of the present disclosure provides customized advertisements.

When the input signal of the customized advertisement ON/OFF icon 703_1 is received through the remote control device 200 while the main advertisement video is displayed in the first area 701, which is the entire area of the display 180, as shown in (a) of Fig. 7, the display device 100 can display the customized advertisement video in the second area 707 overlapping the first area 701 as shown in (b) of Fig. 7.

The customized advertisement or the customized advertisement video can be the product in the main advertisement video and the customized advertisement corresponding to the position information of the display device 100 or the position customized advertisement (for example, the local business advertisement of the main advertisement product). For example, when the main advertisement is an insurance advertisement as shown in Fig. 7, the customized advertisement may be an advertisement for an insurance agent in a region where the display device 100 is located.

As another example, when the main advertisement video is a car advertisement as shown in Fig. 8, the customized advertisement video may be an advertisement for a car dealership in a region where the display device 100 is located.

In addition, when the controller 170 receives the input signal of the customized advertisement change icon 803_2, the controller 170 can recognize the input signal as a signal for changing the customized advertisement to another customized advertisement, that is, a signal for changing the first customized advertisement video to the second customized advertisement video.

For example, when the controller 170 receives the input signal of the custom advertisement change icon 803_2 through the remote control device 200 while displaying the first customized advertisement video in the second area 807 as shown in (a) of Fig. 8, the controller 170 can change the first customized advertisement video displayed in the second area 807 to the second customized advertisement video as shown in (b) of Fig. 8 and display the second customized advertisement video.

Fig. 9 is a diagram showing an embodiment in which the display device of the present disclosure provides customized advertisements.

When the controller 170 receives an input signal of a display type change icon 903_3 while displaying the main advertisement video in the first area 901, which is the entire area of the display 180 and displaying the customized advertisement video in the second area 907 overlapping the first area 901 as shown in (a) of Fig. 9, the controller 170 can change the display type as shown in (b) of Fig. 9.

In (b) of Fig. 9, the first area 901 can be a left area of the display 180 with reference to the reference line, and the second area 907 can be a right area of the display 180 with reference to the reference line. The reference line of the display 180 can refer to a line drawn vertically based on the midpoint of the horizontal side of the display 180. In this case, the reference line can be referred to as a vertical reference line. This is only an example, and the present disclosure is not limited thereto. For example, the area on the left side of the reference line of the display device 100 can be set as the second area, and the area on the right side of the reference line can be set as the first area. In addition, when the reference line is the horizontal reference line, the area above the reference line can be set as the first area, and the area below the reference line can be set as the second area.

The reference line of the display 180 can be adjusted according to the input of the remote control device 200. For example, when a command to drag and drop the reference line located in the center of the display 180 is received through the pointer 205 of the remote control device 200, the controller 170 can adjust the sizes of the first area 901 and the second area 907 in response to the command.

The controller 170 can display a main advertisement video in the first area 901 and the customized advertisement video in the second area 907 as shown in (b) of Fig. 9.

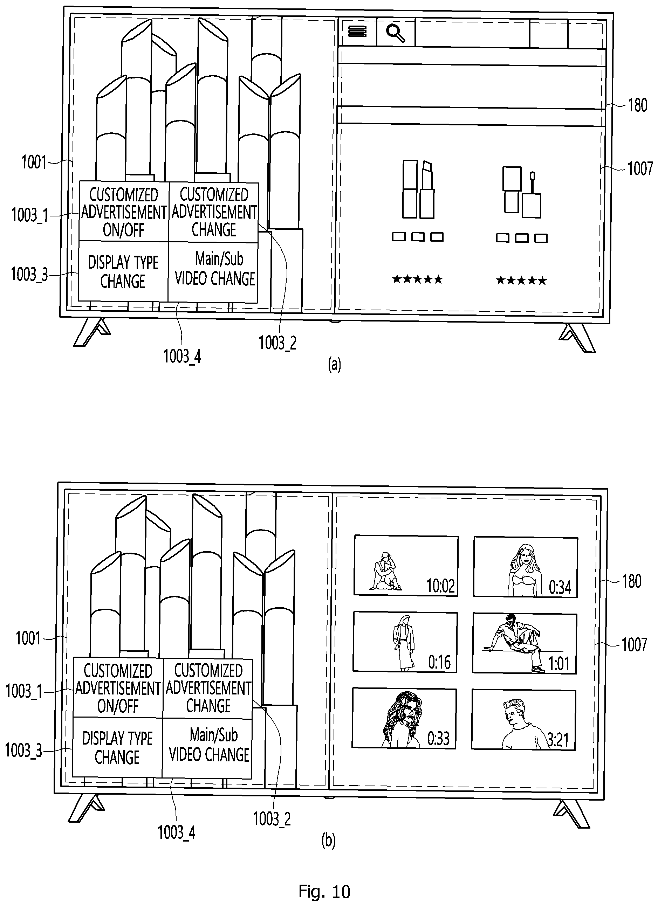

Fig. 10 is a diagram showing an embodiment in which the display device of the present disclosure provides customized advertisements.

Referring to Fig. 10, as shown in (a) of Fig. 10, the controller 170 can receive an input signal of a custom advertisement change icon 1003_3 while displaying a main advertisement video in a first area 1001, which is a partial area of the display 180, and displaying a first customized advertisement video, which is a detailed description video of a product in the main advertisement, in a second area 1007 of the display 180 excluding the first area 1001. As shown in (b) of Fig. 10, the controller 170 can display a thumbnail image in the second area 1007 as the second customized advertisement video.

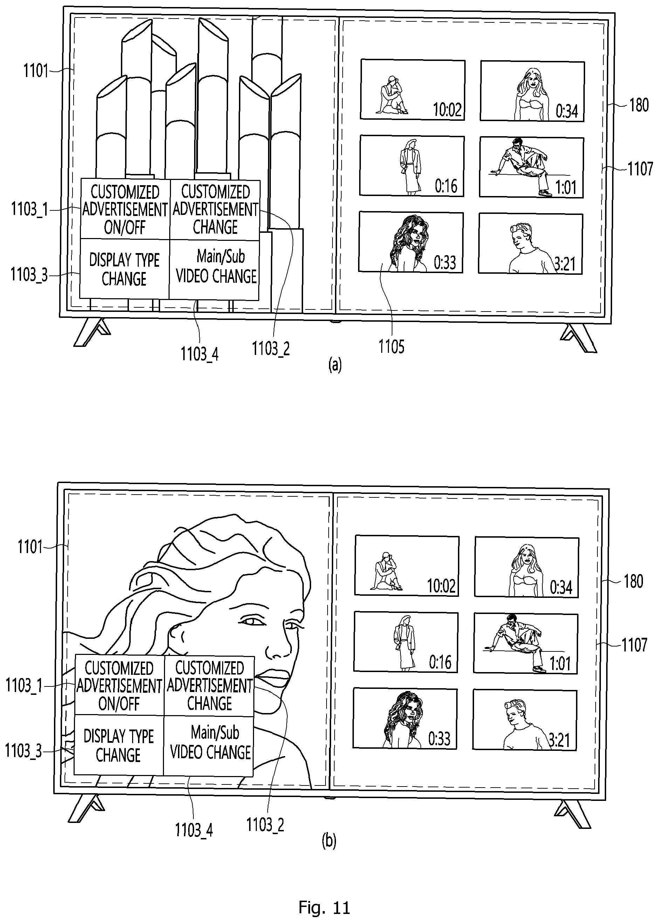

Fig. 11 is a diagram showing an embodiment in which the display device of the present disclosure provides customized advertisements.

Referring to Figure 11, as shown in (a) of Fig. 11, when the controller 170 receives an input signal for selecting a second main advertisement video 1105 being displayed in a second area 1107 while displaying a first main advertisement video in a first area 1101, which is a partial area of the display 180, and displaying thumbnail images of other videos of products in the main advertisement in the second area 1107 of the display 180 excluding the first area 1101, the controller 170 can the second main advertisement video in the first area 1101 of the display 180 and can display thumbnail images of other videos of products in the main advertisement in the second area 1107 as shown in (b) of Fig. 11.

Figs. 12 and 13 are diagrams showing embodiments in which the display device of the present disclosure provides customized advertisements.

Referring to Figs. 12 and 13, the display device 100 of the present disclosure may change and display a main video and a sub video.

When the controller 170 receives an input signal of a main/sub video change icon 1203_4 while displaying a main video, which is an entire area of the display 180, in a first area 1201 and displaying a sub video, which is a partial area of the display 180, in a second area 1207 as shown in (a) of Fig. 12, the controller 170 can display the sub video in the first area 1201, which is an entire area of the display 180, and can display the main video in the second area 1207, which is a partial area of the display 180, as shown in (b) of Fig. 12.

In this case, the main video can be a broadcast video, and the sub video can be a customized advertisement video.

Next, when the controller 170 receives an input signal of a main/sub video change icon 1303_4 while displaying a main video, which is an entire area of the display 180, in a first area 1301 and displaying a sub video, which is a partial area of the display 180, in a second area 1307 as shown in (a) of Fig. 13, the controller 170 can display the sub video in the first area 1301, which is an entire area of the display 180, and can display the main video in the second area 1307, which is a partial area of the display 180, as shown in (b) of Fig. 13.

In this case, the main video can be a main advertisement video, and the sub video can be a customized advertisement video.

The present disclosure described above may be embodied as computer-readable code on a medium on which a program is recorded. A computer-readable medium includes any types of recording devices in which data readable by a computer system is stored. Examples of the computer-readable medium include hard disk drive (HDD), solid state disk (SSD), silicon disk drive (SDD), ROM, RAM, CD-ROM, magnetic tape, floppy disk, optical data storage device, and the like. In addition, the computer may include the controller 180 of the display device 100. Accordingly, the above detailed description should not be construed as restrictive in all aspects and should be considered as illustrative. The scope of the present specification should be determined by reasonable interpretation of the appended claims, and all modifications within the equivalent scope of the present specification fall within the scope of the present specification.

The above description is merely illustrative of the technical spirit of the present disclosure, and various modifications and changes can be made by those of ordinary skill in the art, without departing from the scope of the present disclosure.

Therefore, the embodiments disclosed in the present disclosure are not intended to limit the technical spirit of the present disclosure, but are intended to explain the technical spirit of the present disclosure. The scope of the technical spirit of the present disclosure is not limited by these embodiments.

The respective embodiments disclosed in the present specification may be practiced alone or in combination with other embodiments.

The scope of the present disclosure should be interpreted by the appended claims, and all technical ideas within the scope equivalent thereto should be construed as falling within the scope of the present disclosure.

## Claims

1. A display device which provides a customized advertisement, the display device comprising:
a network interface;
a display; and
a processor configured to transmit an advertisement request signal including customized information to an advertisement server through the network interface, to receive a first main advertisement video and a first customized advertisement video corresponding to the customized information from the advertisement server, to output the first main advertisement video to a first area of the display, and to output the first customized advertisement video to a second area of the display.

2. The display device of claim 1, wherein the customized information comprises at least one of position information indicating a position of the display device, information of the display device, information about preference of a user of the display device, display position information about a display position where the first customized advertisement video is to be displayed within the display, display size information about a display size of the first customized advertisement video, or type information of the first customized advertisement video.

3. The display device of claim 2, wherein the first customized advertisement video comprises at least one of a position customized advertisement video according to the position information, a detailed information video about a product in the first main advertisement video, a second main advertisement video for the product, or thumbnail images of other advertisement videos of the product.

4. The display device of claim 1, wherein the first area is an entire area of the display, and the second area overlaps the first area and is a partial area of the display.

5. The display device of claim 1, wherein the first area is a partial area of the display, and the second area is a partial area of the display excluding the first area.

6. The display device of claim 5, wherein the first area is a left area of a vertical reference line in the display, and the second area is a right area of the reference line.

7. The display device of claim 6, further comprising a user input interface configured to communicate with a remote control device,
wherein the processor is configured to adjust a position of the reference line according to an input of the remote control device.

8. The display device of claim 1, further comprising a user input interface configured to communicate with a remote control device,
wherein, when a change signal for changing the first customized advertisement video is received through the user input interface, the processor is configured to change the displaying of the first customized advertisement video according to a type of the change signal.

9. The display device of claim 8, wherein, when the change signal is a customized advertisement content change signal for changing the first customized advertisement to a second customized advertisement, the processor is configured to change the first customized advertisement to the second customized advertisement and display the second customized advertisement.

10. The display device of claim 8, wherein, when the change signal is a signal for changing a display type of the first customized advertisement, the processor is configured to display the customized advertisement by changing at least one of a size or a position of the first area and the second area.

11. The display device of claim 8, wherein, when the change signal is a signal for changing a main video and a sub video to each other, the processor is configured to display videos by changing a video displayed in the first area and a video displayed in the second area to each other.

12. The display device of claim 1, further comprising:
a user input interface configured to communicate with a remote control device; and
an audio output interface,
wherein the processor is configured to output an audio of the first main advertisement video or an audio of the first customized advertisement video through the audio output interface according to a position of a pointer of the remote control device.

13. An operating method of a display device, the operating method comprising:
transmitting, to an advertisement server, an advertisement request signal including customized information;
receiving, from the advertisement server, a first main advertisement video and a first customized advertisement video corresponding to the customized information; and
outputting the first main advertisement video to a first area of a display and outputting the first customized advertisement video to a second area of the display.

14. A recording medium having recorded thereon an operating method of a display device, the operating method comprising:
transmitting, to an advertisement server, an advertisement request signal including customized information;
receiving, from the advertisement server, a first main advertisement video and a first customized advertisement video corresponding to the customized information; and
outputting the first main advertisement video to a first area of a display and outputting the first customized advertisement video to a second area of the display.
